# EUROPEAN PATENT SPECIFICATION

(11) **EP 0 705 057 B1**
(45) Date of publication and mention of the grant of the patent: **02.05.2002**
(21) Application number: 95115160.4
(22) Date of filing: 26.09.1995
(51) Int. Cl.: H05B 41/295

(54) **High-frequency power supply device, lighting device incorporating an electrodeless discharge lamp, and illuminating apparatus incorporating the lighting device**
Elektronisches Verschaltgerät für eine elektrodenlose Entladungslampe und Gerät mit solch einer Anordnung
Alimentation haute fréquence pour lampe à décharge sans électrodes et appareil contenant un tel dispositif

(30) Priority: 27.09.1994 JP 23165894; 28.02.1995 JP 4091095
(43) Date of publication of application: 03.04.1996
(73) Proprietor: TOSHIBA LIGHTING & TECHNOLOGY CORPORATION, Shinagawa-ku, Tokyo (JP)
(72) Inventor: Shimizu,Keiichi, Kanazawa-ku, Yokohama-shi (JP); Inoue,Akihiro, Chigasaki-shi, Kanagawa-ken (JP); Uemura,Kozo, Yokosuka-shi, Kanagawa-ken (JP); Yokozeki,Ichiro, Yokosuka-shi, Kanagawa-ken (JP)
(74) Representative: Henkel, Feiler, Hänzel

(56) References cited:
- EP-A- 0 604 133
- GB-A- 2 261 779
- US-A- 4 188 660
- US-A- 4 631 449
- US-A- 4 866 585
- US-A- 5 084 801
- US-A- 5 200 672
- PATENT ABSTRACTS OF JAPAN vol. 014, no. 239 (E-0930), 21 May 1990 & JP 02 065098 A (MATSUSHITA ELECTRIC IND CO LTD), 5 March 1990,

## Description

The present invention relates to a high-frequency power supply device having a high conversion efficiency, a lighting device incorporating an electrodeless discharge lamp, and an illuminating apparatus incorporating the lighting device.

High-frequency power supply devices for supplying the output of a rectifier to an inverter, not through a smoothing circuit, are generally and widely used to drive compressor motors of air conditioner or to drive various types of electric apparatuses.

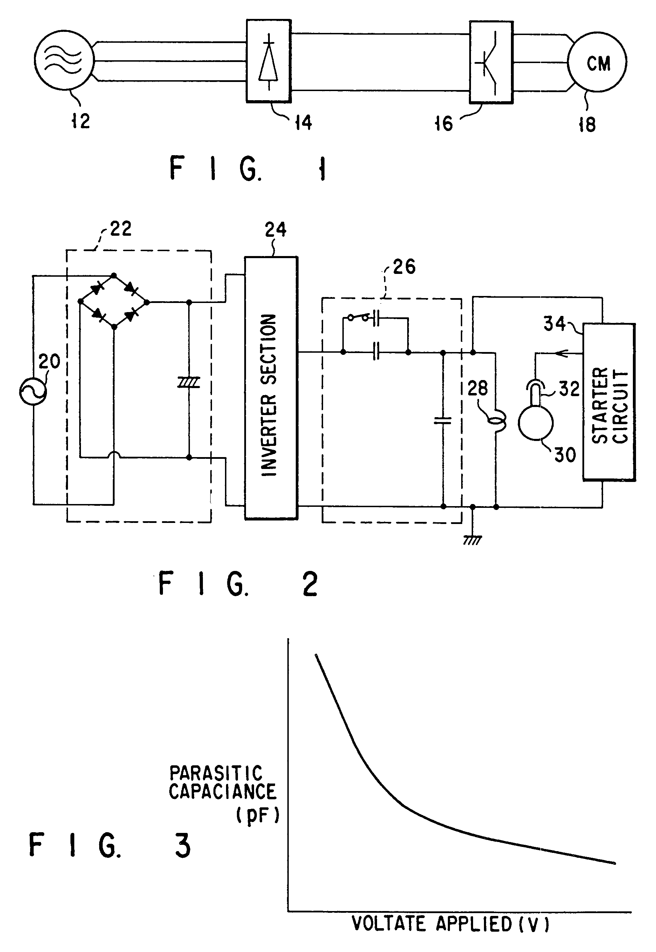

Jpn. Pat. Appln. KOKAI Publication No. 2-202367 discloses a power supply device of this type, designed for use in air conditioners. FIG. 1 is a block diagram of this power supply device. As shown in FIG. 1, the output current of the three-phase AC power supply 12 is rectified by the rectifier 14. The output of the rectifier 14 is applied to the inverter 16, not through a smoothing circuit containing a capacitor. The output of the inverter 16 drives the three-phase compressor motor 18 incorporated in an air conditioner. The inverter 16 comprises a switching element, which operates in such a frequency region as would not adversely influence the AC power lines.

Publication No. 2-202367 does not specify any frequency zone in which the inverter 26 operates. However, it teaches that the high-frequency component superposed on the power-supply lines while the inverter 16 is operating has a frequency higher than 1 KHz. The operating frequency of the inverter 16 is therefore believed to fall in a frequency zone of 1 KHz or less.

The power supply device disclosed in Publication No. 2-202367 has been invented in order not to use a capacitor of great capacitance, thereby to reduce a lower harmonic component.

Various types of loads may be connected to a high-frequency power supply device. One of them is a lighting device incorporating an electrodeless discharge lamp. Jpn. Pat. Appln. KOKAI Publication No. 5-325608 discloses such a lighting device, which is shown in FIG. 2. As seen from FIG. 2, the AC current from a commercial power supply 20 is rectified and smoothed into an AC current in the AC power supply section 22. The output of the section 22 is connected to an inverter section 24. The inverter section 24 is a half-bridge type one comprising a semiconductor. switching element such as a field-effect transistors. The section 24 converts the AC current to a high-frequency current. The output current of the section 24 has a frequency of, for example, 13.56 MHz which is for industrial, scientific and medical (ISM) uses.

The high-frequency power output from the inverter section 24 is supplied via a matching circuit 26 to an excitation coil 28. Arranged near the excitation coil 28 is a high-intensity electrodeless discharge lamp 30. Since the lamp 30 is magnetically connected to the coil 28, an annular electric field is formed in the lamp 30, causing either a discharge.

How the electrodeless discharge lamp 30 is lighted will be described. The AC power supply section 22 connected to the input of the inverter section 24 comprises a diode bridge and a smoothing capacitor. The diode bridge rectifies the commercial AC current into a DC current. The smoothing capacitor smoothes the AC current output from the diode bridge. A gas probe 32 is formed integral with the discharge lamp 30. A high voltage is applied to the gas probe 32 from a starter circuit 34 (a high-voltage generating circuit) for some time after the switch to the discharge lamp 30 has been closed. A glow discharge occurs in the gas probe 32. This discharge promotes the discharge in the discharge lamp 30. The gas probe 32 is indispensable to promote the discharge in the lamp 30. This is because since the discharge medium filled in the lamp 30 has so high a dielectric breakdown voltage (ignition voltage) that the lamp 30 needs an extremely high starting voltage.

As the experiments the present inventors have conducted prove, the lower the voltage applied to the semiconductor element incorporated in the inverter 16 (FIG. 1) or the inverter section 24 (FIG. 2), the lower the conversion efficiency of the power supply device (FIG. 1) or the lighting device (FIG. 2). The reason for this remains unclear, but the decrease in the conversion efficiency may be attributed to the parasitic capacitance of the semiconductor switching element.

As seen from FIG. 3, the parasitic capacitance of a semiconductor switching element depends on the voltage applied to the element. That is, the parasitic capacitance determined by the junction capacitance of the element is influenced by the voltage applied to the semiconductor switching element. More precisely, the lower the voltage applied, the thinner the depletion layer at the PN junction, and the greater the junction capacitance. As a result, the parasitic capacitance increases.

The parasitic capacitance can be considered equivalent to a capacitor which is connected in parallel to a semiconductor switch. The electric charge this capacitor accumulates flows as a current through the semiconductor switch when the switch is closed. The current changes into heat due to the transient internal impedance of the switch, inevitably reducing the conversion efficiency of the power supply device (FIG. 1) or the lighting device (FIG. 2). The electric energy associated with the parasitic capacitance is given as (1/2) × C × V × V × f, where C is the parasitic capacitance, V is the voltage applied to the semiconductor switch, and f is the frequency.

It is believed that, as the parasitic capacitance of the semiconductor switching element increases, the energy loss at the switching operation increases and the conversion efficiency decreases. The conversion efficiency of the power supply device shown in FIG. 1 is lower than that of the lighting device shown in FIG. 2, assuming that the DC voltages applied to the switching elements in these devices have the same effective value. This is because the voltage applied to the switching element in the power supply device, wherein an AC current not smoothed is supplied to the inverter 16, has a peak value lower the voltage applied to the switching element in the lighting device, wherein a smoothed AC current is supplied to the inverter section 24.

In the power supply device of FIG. 1, the inverter 16 operates in a frequency zone of 1 KHz or less as set forth above. Therefore, the energy loss resulting from the parasitic capacitance is relatively small. This is why no research has been conducted on the phenomenon that the conversion efficiency will decrease if the inverter 16 is operated in a frequency zone of more than 1 KHz, or driven at a higher speed. The energy loss is small as long as the inverter 16 operates in a frequency zone not exceeding 1 KHz, probably because the parasitic capacitance largely depends not only on the voltage applied to the semiconductor switch, but also on the switching frequency, i.e., the number of times the equivalent capacitor undergoes charging and discharging within a unit of time.

US-A-4,866,585 discloses a full-wave rectified power supply device for generating DC power from an AC power source. The principle of operation depends upon the high-frequency pulsed power switching followed by high energy charge-discharge principles as applied to power conversion technology. The use of fast turn-on power MOSFETs enables the application of high-frequency switching on this power technology. According to this document the AC power, which has been smoothed to a predetermined value, is converted to a high-frequency of e.g. 1MHz or more.

In view of the foregoing, it is the object of the present invention to provide a high-frequency power supply device having a high conversion efficiency, a lighting device incorporating the power supply device and an electrodeless discharge lamp smoothly, and an illuminating apparatus incorporating this lighting device.

The above object is achieved by a high-frequency power generating means according to claim 1 and a lighting device according to claims 5 and 7. The dependent claims are related to further advantagous aspects of the present invention.

The phrase "without smoothing the low-frequency AC power" used above means that the ratio of the greatest value to the least value of the voltage which the rectifying means outputs while operating stably, i.e., the smoothness of the voltage, is more than 50%. Thus, the rectifying means performs full-wave rectification on a low-frequency AC power which has smoothness of 50% or less, and includes a rectifying device comprising small-capacitance capacitors which are connected in parallel and which do not smooth an input power. The term "low-frequency AC power" used here means not only a commercially available alternating power the frequency of which is either 50 Hz or 60 Hz, but also an alternating power which has a frequency much lower than that of the power generated by the semiconductor switching means.

The semiconductor switching means is one which comprises a semiconductor switch having an PN junction. Examples of the semiconductor switching means are a one-transistor inverter, a half-bridge inverter, a full-bridge inverter and a push-pull inverter. Each example incorporates a semiconductor switching element such as a field-effect transistor or a bipolar transistor and is self-excited or separately excited.

The above-mentioned pulsating DC power is a power whose polarity remains not inverted and whose voltage changes with time such that the ratio of the lowest voltage level to the highest level is 50% or more.

The lamp driving means is, for example, a coil which converts high-frequency power to a magnetic field and which is electromagnetically connected to the electrodeless discharge lamp, a body which generates a electromagnetic field, or an electrode which is provided outside the electrodeless discharge lamp, for generating an electric field. It supplies an excitation energy to the electrodeless discharge lamp when it receives high-frequency power.

The discharge medium, mentioned above, is any medium that receives energy from the lamp driving means and emits radiation such as visible light, ultraviolet rays or infrared rays. It may be a light-emitting metal or an light-emitting gas. Examples of the light-emitting metal are mercury and a metal halide such as a iodide or chloride of sodium, scandidum, cerium, neodymium, thallium or tin. Examples of the light-emitting gas are xenon, argon and krypton.

The "trough" of the pulsating voltage waveform means each of those portions of the voltage waveform at which the voltage level is the lowest.

The light control means may be a reflector or a louver for reflecting the light emitted from the electrodeless discharge lamp. Alternatively, it may be a light filter or an optical interfering member for changing the spectral characteristic of the light, or a transparent member which allows total passage of light, without changing the spectral characteristic of the light.

This invention can be more fully understood from the following detailed description when taken in conjunction with the accompanying drawings, in which:
FIG. 1 is a block diagram showing a conventional high-frequency power supply device;
FIG. 2 is a circuit diagram showing a conventional device for lighting an electrodeless discharge lamp;
FIG. 3 is a graph representing how the parasitic capacitance of a semiconductor switching element depends upon the voltage applied to the element;
FIG. 4 is a circuit diagram of a lighting device incorporating an electrodeless discharge lamp, which is a first embodiment of the invention;
FIG. 5 is a sectional view showing the excitation coil and the discharge lamp, which are illustrated in FIG. 4;
FIGS. 6A to 6D show the waveforms of the voltages applied.at various points in the lighting device shown in FIG. 4;
FIG. 7 is a block diagram of a lighting device incorporating an electrodeless discharge lamp, which is a second embodiment of the invention;
FIG. 8 is a block diagram of a lighting device incorporating an electrodeless discharge lamp, which is a third embodiment of this invention;
FIGS. 9A to 9C represent the waveforms of the voltages applied at various points in the lighting device shown in FIG. 8; and
FIG. 10 is a schematic diagram illustrating the major components of an illuminating apparatus according to the present invention.

Embodiments of the present invention will be described, with reference to the accompanying drawings.

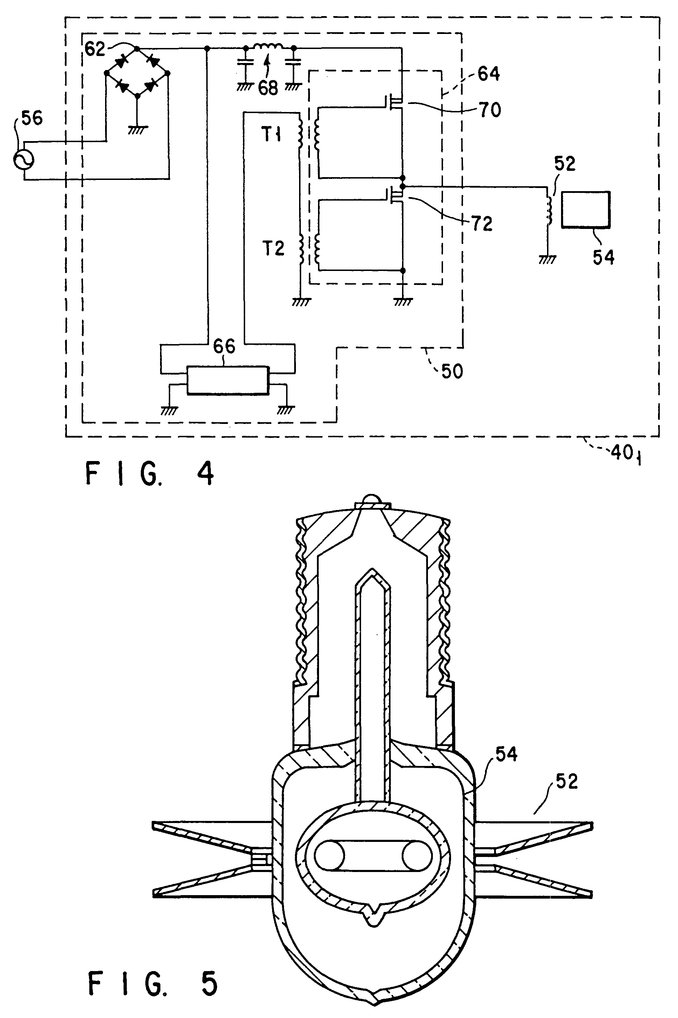

The first embodiment of the invention, which is a device for lighting an electrodeless discharge lamp, will be described, with reference to FIGS. 4, FIG. 5 and FIGS 6A to 6D.

As shown in FIG. 4, the lighting device 40₁ comprises a high-frequency power supply device 50, an excitation coil 52, and a high-intensity electrodeless discharge lamp 54. The high-frequency power supply device 50 has a rectifier section 62, a semiconductor switching section 64, and a high-frequency excitation signal generating section 66.

The rectifier section 62 is comprised of, for example, a diode bridge. The section 62 is connected to a low-frequency commercial AC power supply 56, for performing full-wave rectification on the low-frequency AC current from the power supply 56, thereby to output a pulsating DC power. The pulsating DC power has a smoothness (i.e., ratio of the lowest voltage level to the peak voltage) of 50% or less. More preferably, it has a smoothness of 20% or less. In the present embodiment, the rectifier section 62 output a pulsating DC power whose smoothness is 17%.

The lighting device 40₁ further comprises a noise filter 68 which is constituted by an inductor and two capacitors. The noise filter 68 connects the rectifier section 62 to the semiconductor switching section 64. The semiconductor switching section 64 is comprised of two field-effect transistors (FETs) 70 and 72 which are connected in parallel to each other.

The high-frequency excitation signal generating section 66 generates and supplies an excitation signal to the FETs 70 and 71 via transformers T1 and T2, respectively. The excitation signal has a high frequency of 1 MHz or more. In the present embodiment, the section 66 incorporates a quartz oscillator which generates a high-frequency signal of 13.56 MHz. It is desirable that the excitation signal have a frequency ranging from 2.6 MHz to 15 MHz. If the frequency of the signal falls outside this range, noise will be generated to influence components of the switching section 64 noticeably.

The excitation coil 52 is connected to the node of the FETs 70 and 72. The excitation coil 52 has two turns. As shown in FIG. 5, it has been formed by turning a strip of metal having high electrical conductivity, such as aluminum, around the high-intensity electrodeless discharge lamp 54. Since the coil 52 surrounds the lamp 54, the magnetic field of the coil 52 penetrates the sealed transparent envelope of the lamp 54. (Neither the shape of the coil 52 nor that of the lamp 54 is specified in FIG. 4.)

The envelope of the high-intensity electrodeless discharge lamp 54 is either spherical or cylindrical, made of quartz glass or polycrystalline alumina. The envelope is filled with a discharge medium and a buffer gas. In this embodiment, the discharge medium and the buffer gas are, for example, a mixture of sodium iodide and cerium chloride and xenon, respectively. Sodium iodide and the cerium chloride are used in a mixing ratio of 1:1 in weight. The xenon is sealed in the envelope at a partial pressure of about 500 Torr.

The operation of the lighting device 40₁ thus constructed will be explained, mainly describing the operation of the high-frequency power supply device 50 which comprises the rectifier section 62, the semiconductor switching section 64 and the high-frequency excitation signal generating section 66.

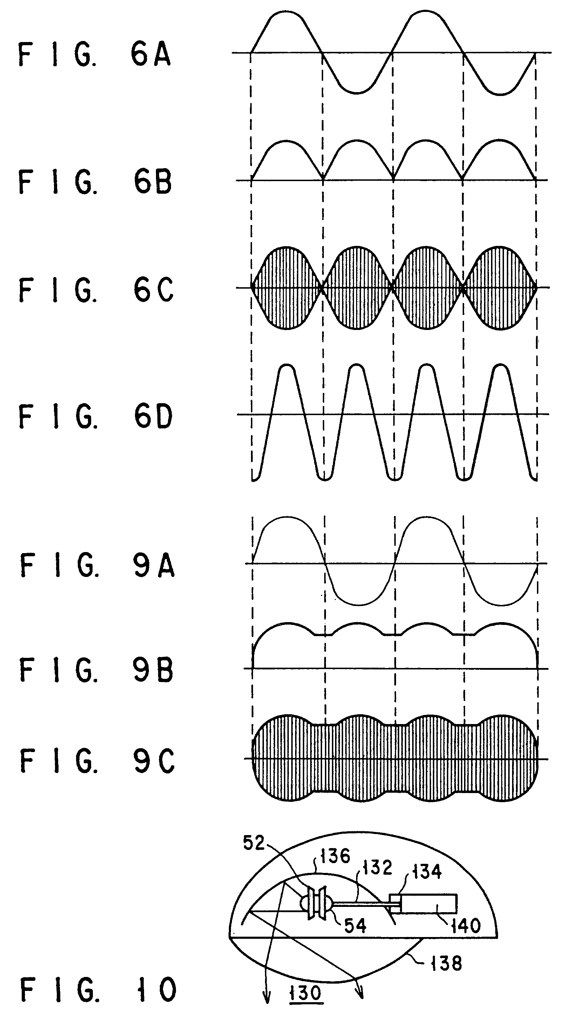

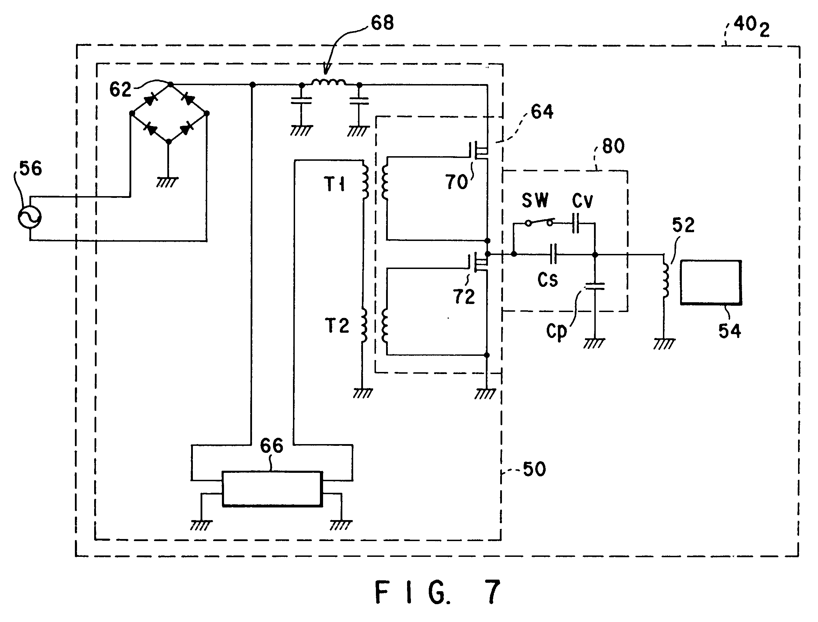

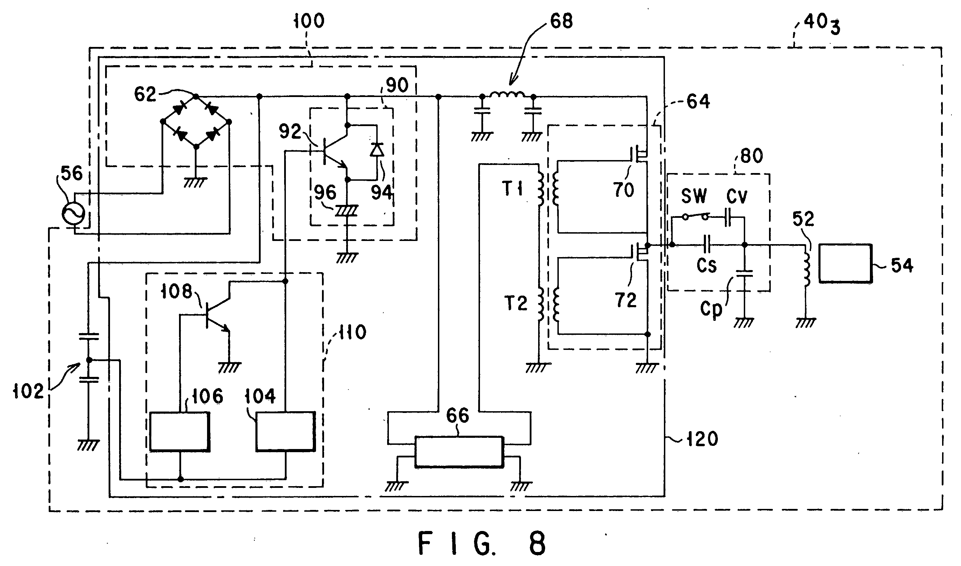

First, the switch (not shown) of the device 40₁ is closed. An AC power having an effective voltage of 200 V and a voltage waveform shown in FIG. 6A is thereby supplied from the low-frequency commercial AC power supply 56 to the high-frequency power supply device 50. In the power supply device 50, the quartz oscillator provided in the excitation signal generating section 66 starts generating a high-frequency excitation signal of 13.56 MHz. The excitation signal is supplied to the semiconductor switching section 64 through the transformers T1 and T2. Meanwhile, the rectifier section 62 performs full-wave rectification on the low-frequency commercial AC power, generating a DC power which has the voltage waveform illustrated in FIG. 6B. Not smoothed, the DC power is a pulsating power having has a peak voltage which is equal to the peak voltage (about 282 V) of the commercial AC power. The pulsating power is supplied to the semiconductor switching section 64.

In the semiconductor switching section 64, the FETs 70 and 72 switch the pulsating DC power in accordance with the excitation supplied from the excitation signal generating section 66 through the transformers T1 and T2. Hence, the semiconductor switching section 64 outputs a pulsating high-frequency power which has a voltage amplitude of about 282 V and the voltage waveform shown in FIG. 6C. The corresponding power has the waveform illustrated in FIG. 6D.

The high-frequency DC power output from the semiconductor switching section 64 is supplied to the excitation coil 52 which is provided outside the power supply device 50. The excitation coil 52 generates a magnetic field, which penetrates the transparent envelope of the discharge lamp 54. An annular electric field is thereby formed in the lamp 30. The electric field dielectrically breaks the discharge medium filled in the envelope, causing either a glow discharge or a corona discharge. This discharge develops into an arc discharge which extends along the inner periphery of the excitation coil 52.

The output capacitance (C_{OUT}) of either FET, which is determined chiefly by the gate-drain capacitance (C_{gd}) and drain-source capacitance (C_{ds}), decreases while the pulsating DC power supplied to the FET remains at a high voltage. The output capacitance (C_{OUT}) increases while the pulsating AC power supplied remains at a low voltage. Nonetheless, the power loss made while the DC power remains at the low level is far less than the power loss made while the DC power remains at the high level. This is because the high-frequency power the semiconductor switching section 64 generates while the DC power rectified by the rectifier section 62 stays at the low voltage is relatively small. Thus, an energy loss in the high-frequency power supply device 50 decreases while the DC power is at the high voltage. As a result, the conversion efficiency of the power supply device 50 is high.

Moreover, since no smoothing capacitors are used in the lighting device 40₁, the AC current supplied to the rectifier section 62 has no quiescent period, the distortion of the AC current can be made less prominent than otherwise. This helps to increase the power factor of the AC current.

It is generally believed that discharge will be extinguished if the high-frequency DC power supplied to the excitation coil located near the lamp is a pulsating one. With a lighting device identical to the device 40₁ shown in FIG. 4, however, the discharge continued in the discharge lamp 54 though the high-frequency power supplied to the excitation coil 52 was a pulsating one. Why so is not clear, but this result may be attributed to the peculiar phenomenon that the radius of the discharge arc did vary with the changes in the output of the semiconductor switching section 64. Namely, this is probably because the discharge length (arc length) while the high-frequency power remains at the low, thus maintaining the discharge in the envelope of the lamp 54.

There seems to be another reason why the discharge continued in the lamp 54 despite the pulsating high-frequency power supplied to the excitation coil 52. As seen from FIG. 6C, the high-frequency power output from the semiconductor switching section 64 has a pulsating waveform whose frequency two times as high as the commercial AC frequency (FIG. 6A). That is, the high-frequency power pulsates twice faster than the commercial AC power. It follows that the excitation coil 52 generates a magnetic field before the ions discharged due to the previously generated magnetic field cease to exist in the envelope of the lamp 54. Further, since the pressure in the lamp 54 is not so high as in the case where mercury is sealed in the lamp 54, the metal ions recombine but slowly and remain for a long time in the lamp 54. This helps to prolong the discharge continued in the lamp 54.

The DC power supplied from the rectifier section 62 to the semiconductor switching section 64 is not smoothed. The DC power is therefore a pulsating one and has a peak voltage higher than that of a smoothed DC power, provided that its effective voltage value is equal to the smoothed DC power. The output of the switching section 64 which switches the pulsating DC power has also a high peak voltage and, therefore, promotes the dielectric breakdown of the discharge medium filled in the electrodeless discharge lamp 54.

The semiconductor switching section 64 is a half-bridge type one comprising the FETs 70 and 72. The dead time during which either FET remains off can be set at such an appropriate value as to delay the phase of the output current. In this case, the output capacitance C_{OUT} of the FET can be charged and discharged so as to be zero the moment the FET is turned off. In other words, the FET can be subjected to so-called zero-crossing switching, thereby to reduce the power loss in the switching section 64.

The semiconductor switching section 64 is controlled by the excitation signal generated by the high-frequency power supply device 50. Instead, the section 64 may be self-excited, without using the power supply device 50. More precisely, the output current of the switching section 64 is fed back to the input of the switching section 64 via a current transformer or the like, thereby to drive the switching section 64.

The high-frequency power supply device shown in FIG. 4 is designed to light an electrodeless discharge lamp. Nevertheless, the present invention can be applied to a high-frequency power supply device for driving an electric motor and to a high-frequency power supply device for an electric device such as a high-frequency amplifier.

Another lighting device 40₂. incorporating electrodeless discharge lamp, which is a second embodiment of the invention, will be described with reference to FIG. 7 which is a block diagram. The components identical to those shown in FIG. 4 are designated at the same reference numerals in FIG. 7 and will not be described in detail.

As shown in FIG. 7, the rectifier section 62 is a diode bridge or the like, for performing full-wave rectification on the low-frequency AC power from a commercial AC power supply 56, thereby to output a pulsating DC power. The rectifier section 62 is connected to a semiconductor switching section 64 by a noise filter 68. The semiconductor switching section 64 is comprised of FETs 70 and 72 which are connected in parallel to each other. The FETs 70 and 72 are connected to receive an excitation signal generated by a high-frequency excitation signal generating section 66 through transformers T1 and T2, respectively. The section 66 incorporates a quartz oscillator which generates a high-frequency signal of 13.56 MHz.

The rectifier section 62, the semiconductor switching section 64 and the high-frequency excitation signal generating section 66 constitute a high-frequency power supply device 50. The power supply device 50 is identical to its counter part of the first embodiment (FIG. 4).

An excitation coil 52 is connected to the node of the FETs 70 and 72 by an impedance matching circuit 80. The impedance matching circuit 80 is comprised of three capacitors Cs, Cp and Cv. The capacitor Cs is connected in series to the excitation coil 52. The capacitor Cp is connected in parallel to the coil 52. The capacitor Cv is connected by a switch SW in parallel to the capacitor Cs. The capacitor Cp and the excitation coil 52 cooperate to achieve parallel resonance.

The excitation coil 52 has one to ten turns. Preferably, it has as many turns as would attain a current density of 90A per turn. As shown in FIG. 5, it has been formed by turning a strip of metal having high electrical conductivity, such as aluminum, around a high-intensity electrodeless discharge lamp 54. The envelope of the high-voltage electrodeless discharge lamp 54 is either spherical or cylindrical, made of quartz glass or polycrystalline alumina. The envelope is filled with a discharge medium.

The operation of the lighting device 40₂ thus constructed will be explained, mainly describing the operation of the high-frequency power supply device 50. At first, the switch (not shown) of the device 40₂ is closed. An AC power having an effective voltage of 200 V and a voltage waveform shown in FIG. 6A is thereby supplied from the low-frequency commercial AC power supply 56 to the high-frequency power supply device 50. In the power supply device 50, the quartz oscillator provided in the excitation signal generating section 66 starts generating a high-frequency excitation signal of 13.56 MHz. The excitation signal is supplied to the semiconductor switching section 64 through the transformers T1 and T2. Meanwhile, the rectifier section 62 performs full-wave rectification on the low-frequency commercial AC power, generating a DC power which has the voltage waveform illustrated in FIG. 6B. Not smoothed, the DC power is a pulsating power having has a peak voltage which is equal to the peak voltage (about 282 V) of the commercial AC power. The pulsating power is supplied to the semiconductor switching section 64.

In the semiconductor switching section 64, the FETs 70 and 72 switch the pulsating DC power in accordance with the excitation signal supplied from the excitation signal generating section 66 through the transformers T1 and T2. Hence, the semiconductor switching section 64 outputs a high-frequency power which has a voltage amplitude of about 282 V and the voltage waveform shown in FIG. 6C. The high-frequency power output from the semiconductor switching section 64 is supplied to the impedance matching circuit 80.

In the impedance matching circuit 80, the switch SW connects the capacitor Cv to the excitation coil 52 at the start of lighting the discharge lamp 54. When the discharge lamp 54 enters into normal operating state, the switch SW disconnects the capacitor Cv from the excitation coil 52. The circuit constant of the impedance matching circuit 80 is thereby changed. The matching between the excitation coil 52 and the switching section 64 (i.e., means for generating a high-frequency power) is improved, notwithstanding the impedance changes occurring at the start of lighting the discharge lamp 54 and again at the time the lamp 54 enters into normal operating state. The power loss is therefore reduced in the lighting device 40₂.

The high-frequency power has a voltage amplitude of about 800 V as seen from FIG. 6D, because of the parallel resonance which is achieved by the excitation coil 52 and the capacitor Cp. The high-frequency power is supplied to the excitation coil 52. The coil 52 generates a magnetic field, which penetrates the transparent envelope of the discharge lamp 54. An annular electric field is thereby formed in the lamp 30. The electric field dielectrically breaks the discharge medium filled in the envelope, causing either a glow discharge or a corona discharge. This discharge develops into an arc discharge which extends along the inner periphery of the excitation coil 52.

Therefore, as in the first embodiment, the discharge will not be extinguished. Rather, it is maintained in the envelope of the lamp 54. Furthermore, an energy loss in the high-frequency power supply device 50 decreases while the pulsating DC power is at the high voltage, as in the case of the first embodiment. The conversion efficiency of the power supply device 50 is therefore high in the second embodiment, too.

The DC power supplied to the semiconductor switching section 64 is not smoothed as in the first embodiment. The DC power is therefore a pulsating one and has a peak voltage higher than that of a smoothed DC power, provided that its effective voltage value is equal to the smoothed DC power. The output of the switching section 64 which switches the pulsating DC power has also a high peak voltage. It therefore promotes the dielectric breakdown of the discharge medium filled in the electrodeless discharge lamp 54.

Still further, since no smoothing capacitors are used in the lighting device 40₁, the AC current supplied to the rectifier section 62 has no quiescent period, the distortion of the AC current can be made less prominent than otherwise. In addition, since the impedance matching circuit 80 improves the matching between the excitation coil 52 and the semiconductor switching section 64. Hence, the power loss can be decreased also in the second embodiment.

Another lighting device 40₃ incorporating an electrodeless discharge lamp, according to a third embodiment of this invention, will be described with reference to FIG. 8 and FIGS. 9A to 9C. The components identical to those shown in FIGs. 4 and 7 are designated at the same reference numerals in FIG. 8 and will not be described in detail.

As shown in FIG. 8, the rectifier section 62 is a diode bridge or the like, for performing full-wave rectification on the low-frequency AC power from a commercial AC power supply 56, thereby to output a pulsating DC power. The output of the rectifier section 62 is connected to a supplementary voltage generating section 90. The section 90 comprises a transistor 92 used as a switching element, a diode 94 connected in parallel to the transistor 92, and a smoothens capacitor 96 connected between the ground and the node of the emitter of the transistor 92 and the cathode of the diode 94. The smoothing capacitor 96 smoothes a part of the pulsating current which the rectifier section 62 outputs while the transistor 92 remains on. In other words, the capacitor 96 generates a supplementary voltage at each trough of the waveform of the voltage output from the rectifier section 62.

The rectifier section 62 and the supplementary voltage generating section 90 constitute a DC power supply 100. The DC current generated by the DC power supply 100 is supplied through a noise filter 68 to a semiconductor switching section 64, as in the first and second embodiments. The semiconductor switching section 64 comprises FETs 70 and 72 which receive a drive signal from the secondary windings of transformers T1 and T2, respectively.

The lighting device 40₃ further comprises a voltage-dividing capacitor 102, two timer circuits 104 and 106, and a transistor 108. The first timer circuit 104 is connected to the capacitor 102, which in turn is connected to the output of the rectifier section 62. Hence, it outputs a DC power upon lapse of a prescribed time from the start of the supply of the commercial AC power to the lighting device 40₃. The DC current is supplied to the base of the transistor 92, which is connected in series to the smoothing capacitor 96 incorporated in the supplementary voltage generating section 90. The second timer circuit 106 is connected to the capacitor 102, too, and receives the DC power from the rectifier section 62 through the capacitor 102. The output of the second timer circuit 106 is connected to the base of the transistor 108. The emitter and collector of the transistor 108 are connected to the ground and the base of the transistor 92, respectively.

The first timer circuit 104, the second timer circuit 106 and the transistor 108 constitute a control section 110 for controlling the supplementary voltage generating section 90.

As shown in FIG. 8, the lighting device 40₃ incorporates an excitation signal generating section 66. The section 66 incorporates a quartz oscillator which generates a high-frequency signal of 13.56 MHz. The transformers T1 and T2 are connected to each other. The node of the transformers T1 and T2 is connected to an excitation coil 52 by an impedance matching circuit 89, as in the second embodiment. The impedance matching circuit 80 is comprised of three capacitors Cs, Cp and Cv. The capacitor Cs is connected in series to the excitation coil 52. The capacitor Cp is connected in parallel to the coil 52. The capacitor Cv is connected by a switch SW in parallel to the capacitor Cs. The capacitor Cp and the excitation coil 52 cooperate to achieve parallel resonance.

In the third embodiment, the rectifier section 62, the semiconductor switching section 64, the excitation signal generating section 66, the supplementary voltage generating section 90, and the control section 110 constitute a high-frequency power supply device 120.

How the lighting device 40₃ described above operates will now be explained.

At first, the switch (not shown) of the device 40₃ is closed. An AC power having an effective voltage of 200 V and a voltage waveform shown in FIG. 9A is thereby supplied from the low-frequency commercial AC power supply 56 to the high-frequency power supply device 120. In the power supply device 120, the quartz oscillator provided in the excitation signal generating section 66 starts generating a high-frequency excitation signal of 13.56 MHz. At the same time, the first timer circuit 104 and the second timer circuit 106 start measuring time.

Meanwhile, the rectifier section 62 performs full-wave rectification on the low-frequency commercial AC power, generating a DC power which has the voltage waveform illustrated in FIG. 6B. Not smoothed, the DC power is pulsated, which having has a peak voltage which is equal to the peak voltage (about 282 V) of the commercial AC power. The pulsating power is supplied to the semiconductor switching section 64.

In the semiconductor switching section 64, the FETs 70 and 72 switch the pulsating DC power in accordance with the excitation signal supplied from the excitation signal generating section 66 through the transformers T1 and T2. Hence, the semiconductor switching section 64 outputs a high-frequency power which has a voltage amplitude of about 282 V and the voltage waveform shown in FIG. 6C. The high-frequency power output from the semiconductor switching section 64 is supplied to the impedance matching circuit 80.

In the impedance matching circuit 80, the switch SW connects the capacitor Cv to the excitation coil 52 at the start of lighting the discharge lamp 54. When the discharge lamp 54 enters into normal operating state, the switch SW disconnects the capacitor Cv from the excitation coil 52. The circuit constant of the impedance matching circuit 80 is thereby changed. The matching between the excitation coil 52 and the switching section 64 (i.e., means for generating a high-frequency power) is improved, notwithstanding the impedance changes occurring at the start of lighting the discharge lamp 54 and again at the time the lamp 54 enters into normal operating state. The power loss is therefore reduced in the lighting device 40₂.

The high-frequency power has a voltage amplitude of about 800 V as seen from FIG. 6D, because of the parallel resonance which is achieved by the excitation coil 52 and the capacitor Cp. The high-frequency power is supplied to the excitation coil 52. The coil 52 generates a magnetic field, which penetrates the transparent envelope of the discharge lamp 54. An annular electric field is thereby formed in the lamp 30. The electric field dielectrically breaks the discharge medium filled in the envelope, causing either a glow discharge or a corona discharge. This discharge develops into an arc discharge which extends along the inner periphery of the excitation coil 52.

The first timer circuit 104 outputs a DC current upon lapse of the prescribed time from the start of the supply of the commercial AC power to the lighting device 40₃. In the supplementary voltage generating section 90, the transistor 92 is thereby turned on, and the smoothing capacitor 96 is connected in parallel to the output of the rectifier section 62. The smoothing capacitor 96 smoothes a part of the pulsating DC power to a smoothness of, for example, about 70%. Namely, the capacitor 96 generates a supplementary voltage at each trough of the waveform of the voltage output from the rectifier section 62, as illustrated in FIG. 9B.

While the supplementary voltage generating section 90, which includes the smoothing capacitor 96, is operating, the high-frequency power output from the semiconductor switching section 64 and having the voltage waveform shown in FIG. 6C is smoothed to have the voltage waveform illustrated in FIG. 9C. The glow or corona discharge in the lamp 54 therefore readily develops into an arc discharge which extends along the inner periphery of the excitation coil 52.

The second timer circuit 106 outputs a DC current upon lapse of a prescribed time from the start of the supply of the commercial AC power to the lighting device 40₃, some time after the first timer circuit 104 has output a DC current. The DC current the second timer circuit 106 outputs is applied to the base of the transistor 108, which is turned on. As a result, the DC current from the first timer circuit 104 flows to the transistor 108, turning off the transistor 92 provided in the supplementary voltage generating section 90. The section 90 stops operating. The DC power supplied from the rectifier section 62 to the semiconductor switching section 64 is no longer smoothed.

Therefore, as in the first and second embodiments, the discharge will not be extinguished. Rather, it is maintained in the envelope of the lamp 54. Furthermore, an energy loss in the high-frequency power supply device 120 decreases while the pulsating DC power is at the high voltage, as in the case of the first embodiment. The conversion efficiency of the power supply device 120 is therefore high in the third embodiment, too.

The DC power supplied to the semiconductor switching section 64 is not smoothed as in the first and second embodiments. The DC power is therefore a pulsating one and has a peak voltage higher than that of a smoothed DC power, provided that its effective voltage value is equal to the smoothed DC power. The output of the switching section 64 which switches the pulsating DC power has also a high peak voltage. It promotes the dielectric breakdown of the discharge medium filled in the electrodeless discharge lamp 54.

Further, since the smoothing capacitor 96 is no longer connected the output of the rectifier circuit 62 once the discharge lamp 54 has entered into normal operating state. Thus, the AC current supplied to the rectifier section 62 has no quiescent period, and the distortion of the AC current can be made less prominent than otherwise.

As indicated above, the capacitor 96 generates a supplementary voltage at each trough of the waveform of the voltage output from the rectifier section 62, for the prescribed time after the commercial AC power supply 56 starts supplying the AC power to the lighting device 40₃. During this time, the excitation coil 52 is applied with a voltage high enough to cause the glow or corona discharge to develop into an arc discharge. Upon lapse of this time, the smoothing capacitor 96 is disconnected from the rectifier section 62, whereby the supplementary voltage generating section 90 stops operating. Thus, the AC current supplied to the rectifier section 62 has no quiescent period, which reduces the distortion of the AC current.

In addition, since the impedance matching circuit 80 improves the matching between the excitation coil 52 and the semiconductor switching section 64. Hence, the power loss can be decreased in the third embodiment, as well.

As described above, the supplementary voltage generating section 90 incorporates a smoothing capacitor. It may be replaced by a DC power supply which is connected to the output of the rectifier section 62, for superposing a DC current on the pulsating DC current generated by the rectifier section 62.

An illuminating apparatus 130 according to this invention will be described, with reference to FIG. 10.

As shown in FIG. 10, the illuminating apparatus 130 comprises an electrodeless discharge lamp 54, a thin pipe 132, a socket 143, a bowl-shaped reflector 136, and a prism glass cover 138. The lamp 54 is attached to one end of the pipe 132, the other end of which is secured to the socket 134. lamp 54 and a greater part of the pipe 132 are provided in the reflector 136. The socket 134 is arranged outside the reflector 136, while the lamp 54 and a greater part of the pipe 132 are provided in the reflector 136. The opening of the reflector 136 is covered by the prism glass cover 138. A metal net (not shown) is embedded in the prism glass cover 138, for preventing electromagnetic waves from leaking from the discharge lamp 54. The reflector 136 and the cover 238 constitute a light-controlling section.

An excitation coil 52 surrounds the discharge lamp 54. Both end portions of the coil 52, which are electrically insulated, penetrate the bowl-shaped reflector 136 and are fastened to a bowl 140 made of aluminum. The coil 52 is electrically connected to a high-frequency power supply device (not shown) of the type which is used in the lighting devices described above.

The reflector 136 reflects light beams emitted from the discharge lamp 54 and applies it to the prism glass cover 138, which diffracts the light beams. The light beams are allied along the paths indicated by the arrows in FIG. 10.

The excitation coil 52 and the electrodeless discharge lamp 54 may have shapes other than those described above and can be made of materials other than those specified above. Similarly, the discharge medium filled in the envelope of the lamp 54 may be replaced by a different one. The rectifier section, the semiconductor switching section, the high-frequency power supply device, the excitation signal generating section 66 and the timer circuits may be placed by those which are different in structure and components. In particular, if the rectifier section is a full-wave, double-voltage rectifier, the output of the semiconductor switching section and the output of the high-frequency power supply device will have an even higher peak voltage.

In each of the embodiments described above, the semiconductor switching section 64 can include an actuating means such as a starter circuit, so that the electrodeless discharge lamp 54 may be started still more reliably. Furthermore, the semiconductor switching section 64 which comprises field-effect transistors may be replaced by one incorporating semiconductor switching elements of another type, such as bipolar transistors.

Any lighting device according to the invention, that has been described above, need not have an actuating means such as a starter circuit. Nonetheless, if the commercial AC voltage fluctuate much, a starter circuit may be provided in the semiconductor switching section 64 in order to actuate the discharge lamp 54 reliably.

## Claims

1. A high-frequency power generating means for a lighting device comprising:
rectifying means (62) for performing full-wave rectification on a low-frequency AC power, without smoothing the low-frequency AC power, thereby to generate a pulsating voltage;
supplementary voltage generating means (90) for generating a supplementary voltage at each trough of a waveform of the pulsating voltage;
means (66) for generating a high-frequency excitation signal;
control means (110) for driving said supplementary voltage generating means (90) for a predetermined time form a start of supplying the low-frequency AC power to said rectifying means (62);
semiconductor switching means (64) for switching a DC power generated by said rectifying means (62) in accordance with an excitation signal; and
lamp driving means (52) for supplying the high-frequency power to an electrodeless discharge lamp (54).

2. A high-frequency power generating means according to claim 1, further comprising impedance matching means (80) for matching an impedance with said lamp driving means (52).

3. A high-frequency power generating means according to claim 1, wherein said lamp driving means (54) further comprises means for generating a magnetic field which penetrates an envelope of said electrodeless discharge lamp (54).

4. A high frequency power generating means according to claim 1, wherein said control means (110) includes timer circuits (104, 106) for measuring a predetermined period of time after the low-frequency AC power is supplied to said rectifying means (62).

5. The lighting device comprising the high-frequency. power generating means according to any of claims 1 to 4 and a electrodeless discharge lamp (54) having a transparent airtight envelope filled with a discharge medium, wherein said discharge medium contains no mercury.

6. The lighing device according to claim 5,
**characterized in that**
said electrodeless lighting device (40) is used in an illuminating apparatus, and further comprises
light control means (136, 138) for controlling light emitted from said electrodeless discharge lamp (54); and
housing containing said lighting device and said light control means.

7. The ligthing device comprising:
a high-frequency power supply device (50) including rectifying means (62) for performing full-wave rectification on a low-frequency AC power, without smoothing the low-frequency AC power;
a semiconductor switching means (64) for switching an output, which is supplied from said rectifying means (62), to generate a high-frequency power of at least 1 MHz;
an electrodeless discharge lamp (54) having a transparent airtight envelope fitted with a discharge medium; and
lamp driving means (52) provided between said high-frequency power supply device (50) and said electrodeless discharge lamp (54) for supplying the high-frequency power generated from said high-frequency power supply device (50) to said electrodeless discharge lamp (54).

## Patentansprüche

1. Hochfrequenzleistungserzeugungsmittel für eine Beleuchtungsvorrichtung mit:
Gleichrichtermittel (62) zum Durchführen einer Doppelweggleichrichtung an einem Niederfrequenzwechselstrom ohne Glätten des Niederfrequenzwechselstroms, wodurch eine pulsierende Spannung erzeugt wird;
Zusatzspannungserzeugungsmittel (90) zum Erzeugen einer Zusatzspannung an jedem Tal eines Signalverlaufs der pulsierenden Spannung;
Mittel (66) zum Erzeugen eines Hochfrequenzanregungssignals;
Steuermittel (110) zum Treiben des Zusatzspannungserzeugungsmittels (90) für eine vorbestimmte Zeit von einem Start des Zuführens des Niederfrequenzwechselstroms an das Gleichrichtermittel (62);
Halbleiterumschaltmittel (64) zum Umschalten eines durch das Gleichrichtermittel (62) erzeugten Gleichstroms in Übereinstimmung mit einem Anregungssignal; und
Lampentreibermittel (52) zum Liefern der Hochfrequenzleistung an eine elektrodenlose Entladungslampe (54).

2. Hochfrequenzleistungserzeugungsmittel gemäß Anspruch 1, ferner mit Impedanzanpassungsmittel (80) zum Anpassen einer Impedanz mit dem Lampentreibermittel (52).

3. Hochfrequenzleistungserzeugungsmittel gemäß Anspruch 1, bei dem das Lampentreibermittel (54) ferner Mittel zum Erzeugen eines Magnetfelds umfaßt, das in eine Umhüllung der elektrodenlosen Entladungslampe (54) eindringt.

4. Hochfrequenzleistungserzeugungsmittel gemäß Anspruch 1, bei dem das Steuermittel (110) Zeitgeberschaltungen (104, 106) zum Messen einer vorgegebenen Zeitspanne nach dem Zuführen des Niederfrequenzwechselstroms an das Gleichrichtermittel (62) umfaßt.

5. Beleuchtungsvorrichtung mit dem Hochfrequenzleistungserzeugungsmittel gemäß einem der Ansprüche 1 bis 4 und einer elektrodenlosen Entladungslampe (54) mit einer mit einem Entladungsmedium gefüllten transparenten luftdichten Umhüllung, wobei das Entladungsmedium kein Quecksilber enthält.

6. Beleuchtungsvorrichtung gemäß Anspruch 5, **dadurch gekennzeichnet, daß**
die elektrodenlose Beleuchtungsvorrichtung (40) in einer Beleuchtungsvorrichtung verwendet wird, und ferner
Lichtsteuermittel (136, 138) zum Steuern des von der elektrodenlosen Entladungslampe (54) emittierten Lichts; und
ein Gehäuse, das die Beleuchtungsvorrichtung und das Lichtsteuermittel enthält, umfaßt.

7. Beleuchtungsvorrichtung mit:
einer Hochfrequenzstromversorgungsvorrichtung (50) mit Gleichrichtermittel (62) zum Durchführen einer Doppelweggleichrichtung an einem Niederfrequenzwechselstrom ohne Glätten des Niederfrequenzwechselstroms;
einem Halbleiterumschaltmittel (64) zum Umschalten einer Ausgabe, die von dem Gleichrichtermittel (62) geliefert wird, um eine Hochfrequenzleistung von mindestens 1 MHz zu erzeugen;
einer elektrodenlosen Entladungslampe (54) mit einer transparenten luftdichten Umhüllung, die mit einem Entladungsmedium ausgerüstet ist; und
Lampentreibermittel (52), das zwischen der Hochfrequenzstromversorgungsvorrichtung (50) und der elektrodenlosen Entladungslampe (54) zum Liefern der von der Hochfrequenzstromversorgungsvorrichtung (50) erzeugten Hochfrequenzleistung an die elektrodenlose Entladungslampe (54) vorgesehen ist.

## Revendications

1. Moyen de génération de puissance hautes fréquences pour un dispositif d'éclairage comprenant :
un moyen de redressement (62) pour réaliser un redressement pleine onde sur une puissance alternative ou AC basses fréquences sans lisser la puissance AC basses fréquences, afin d'ainsi générer une tension pulsée ;
un moyen de génération de tension supplémentaire (90) pour générer une tension supplémentaire au niveau de chaque creux d'une forme d'onde de la tension pulsée ;
un moyen (66) pour générer un signal d'excitation hautes fréquences ;
un moyen de commande (110) pour piloter ledit moyen de génération de tension supplémentaire (90) pendant un temps prédéterminé depuis un début d'application de la puissance AC basses fréquences sur ledit moyen de redressement (62) ;
un moyen de commutation à semiconducteur (64) pour commuter une puissance continue ou DC qui est générée par ledit moyen de redressement (62) conformément à un signal d'excitation ; et
un moyen de pilotage de lampe (52) pour appliquer la puissance hautes fréquences sur une lampe à décharge sans électrode (54).

2. Moyen de génération de puissance hautes fréquences selon la revendication 1, comprenant en outre un moyen d'adaptation d'impédance (80) pour adapter une impédance avec ledit moyen de pilotage de lampe (52).

3. Moyen de génération de puissance hautes fréquences selon la revendication 1, dans lequel ledit moyen de pilotage de lampe (52) comprend en outre un moyen pour générer un champ magnétique qui penètre dans une enveloppe de ladite lampe à décharge sans électrode (54).

4. Moyen de génération de puissance hautes fréquences selon la revendication 1, dans lequel ledit moyen de commande (110) inclut des circuits de minuterie (104,106) pour mesurer une période temporelle prédeterminée qui s'écoule depuis un début d'application de la puissance AC basses fréquences sur ledit moyen de redressement (62).

5. Dispositif d'éclairage comprenant le moyen de génération de puissance hautes fréquences selon l'une quelconque des revendications 1 à 4 et une lampe à décharge sans électrode (54) comportant une enveloppe étanche à l'air transparente qui est remplie d'un milieu de décharge, où ledit milieu de décharge ne contient pas de mercure.

6. Dispositif d'éclairage selon la revendication 5, **caractérisé en ce que** :
ledit dispositif d'éclairage sans électrode (40) est utilisé dans un appareil d'éclairage, et comprend en outre :
un moyen de commande de lumière (136, 138) pour commander une lumière qui est émise depuis ladite lampe à décharge sans électrode (54) ; et
un boîtier qui contient ledit dispositif d'éclairage et ledit moyen de commande de lumière.

7. Dispositif d'éclairage comprenant :
un dispositif d'application de puissance hautes fréquences (50) incluant un moyen de redressement (62) pour réaliser un redressement pleine onde sur une puissance alternative ou AC basses fréquences sans lisser la puissance AC basses fréquences ;
un moyen de commutation à semiconducteur (64) pour commuter une sortie qui est appliquée depuis ledit moyen de redressement (62) afin de générer une puissance hautes fréquences d'au moins 1 MHz ;
une lampe à décharge sans électrode (54) qui comporte une enveloppe étanche à l'air transparente remplie d'un milieu de décharge ; et
un moyen de pilotage de lampe (52) qui est prévu entre ledit dispositif d'application de puissance hautes fréquences (50) et ladite lampe à décharge sans électrode (54) pour appliquer la puissance hautes fréquences qui est générée à partir dudit dispositif d'application de puissance hautes fréquences (50) sur ladite lampe à décharge sans électrode (54).
